# EUROPÄISCHE PATENTSCHRIFT

(11) **EP 0 358 967 B1**
(45) Veröffentlichungstag und Bekanntmachung des Hinweises auf die Patenterteilung: **10.03.1993**
(21) Anmeldenummer: 89115138.3
(22) Anmeldetag: 17.08.1989
(51) Int. Cl.: G01R 31/00

(54) **Schaltkreis zur hochgenauen Schlupffrequenzeinstellung**
Circuit for precision controlling differential frequency
Circuit pour régler une façon très précise la fréquence différentielle

(30) Priorität: 12.09.1988 DE 3830923
(43) Veröffentlichungstag der Anmeldung: 21.03.1990
(73) Patentinhaber: VEBA KRAFTWERKE RUHR AKTIENGESELLSCHAFT, 45896 Gelsenkirchen (DE)
(72) Erfinder: Deutschmann, Norbert, D-4650 Gelsenkirchen 2 (DE)
(74) Vertreter: Cohausz & Florack Patentanwälte

(56) Entgegenhaltungen:
- EP-A- 0 002 811
- US-A- 4 071 033
- ELECTRONICS, Band 45, Nr. 10, 8. Mai 1972, Seiten 102-103; J. SNAPER: "Control one-shot divides frequency by up to 30"
- PATENT ABSTRACTS OF JAPAN, Band 6, Nr. 52, 7. April 1982 (E-100)[930], 7. April 1982; & JP-A-56 164 601 (FUJITSU K.K.) 17-12-1981
- IEEE TRANS. ON POWER APPARATUS & SYST., Band PAS-99, Nr. 1, Januar/Februar 1980, Seiten 134-140, IEEE, New York, US; D.C. NAGY et al.: "An improved technique for calibrating and testing power system generation automatic synchronizing and speed matching relays"

## Beschreibung

Die Erfindung betrifft eine Schaltungsanordnung zur Erzeugung von mindestens zwei Wechselspannungsausgangssignalen mit veränderbarer Schlupffrequenz.

Beim Anschluß von Wechselstrom- oder Drehstromaggregaten, zum Beispiel Wechselstrom- oder Drehstromgeneratoren an im Betrieb befindliche Netze ist es erforderlich, daß der Anschluß im Synchronismus erfolgt, das heißt, daß im Moment des Anschaltens Spannungsbetrag und insbesondere Frequenz- und Phasenlage von zugeschaltetem Aggregat und Netz übereinstimmen. Hierzu dienen sogenannte Parallelschalteinrichtungen. Eine solche Parallelschalteinrichtung weist bestimmte Grenzschaltschlupfwerte, zum Beispiel 0,25 %, 0,5 %, 0,75 % oder 1 % auf, bei deren Unterschreiten ein Aufschalten des anzuschließenden Aggregates an das Netz erfolgt. Da die Parallelschalteinrichtungen dem Verschleiß unterworfene Bauteile aufweisen, ist es erforderlich, diese zur Sicherstellung ihrer Funktion regelmäßig zu warten und danach die Parallelschalteinrichtung neu zu kalibrieren.

Hierzu sind Schaltungsanordnungen der eingangs genannten Art bekannt, wobei die Wechselspannungsausgangssignale von getrennten Quellen erzeugt werden und durch gegenseitige Abstimmung der für die Prüfung erforderliche Schlupf eingestellt wird. Da jedoch die Netzfrequenz, an der auch das Prüfgerät angeschlossen ist, bestimmten zeitabhängigen Schlupfschwankungen unterworfen ist, deren Größe durch die Spezifikationen des Energieversorgungsunternehmens festgelegt ist (zum Beispiel von - 0,06 % bis + 0,08 % innerhalb von drei Minuten), addieren sich die Schlupfschwankungen je nach Vorzeichen zu dem von der Schaltungsanordnung eingestellten gewünschten Schlupf hinzu und führen zu Justierfehlern, wodurch die Kalibrierung der Parallelschalteinrichtung höchst ungenau wird.

Daher liegt der Erfindung die Aufgabe zugrunde, eine Schaltungsanordnung zur Erzeugung von mindestens zwei Wechselspannungsausgangssignalen mit veränderbarer Schlupffrequenz zu schaffen, mittels der eine zuverlässige und genaue Einstellung der Schlupffrequenz ermöglicht wird.

Diese Aufgabe wird dadurch gelöst, daß jedem Wechselspannungsausgangssignal zugeordnete, gemeinsam von einem hochstabilen Oszillator gespeiste Frequenzteiler vorgesehen sind, deren jeweilige Teilungsverhältnisse durch feste Vorgabewerte derart variierbar sind, daß die Schlupffrequenz zwischen den einzelnen Wechselspannungsausgangssignalen einstellbar ist.

Die erfindungsgemäße Lösung zeichnet sich dadurch aus, daß durch die den einzelnen Wechselspannungsausgängen zugeordneten Frequenzteiler, deren Teilerverhältnisse einzeln vorgebbar sind, und die von einer gemeinsamen Zeitbasis angesteuert werden, der von der Schaltung erzeugte Schlupf nur noch durch die Vorgabe für die einzelnen Teilerverhältnisse bestimmt wird. Durch die netzspannungsunabhängige gemeinsame Quelle werden Schlupfschwankungen und Drifterscheinungen innerhalb der Schaltungsanordnung wirken sich gleichsinnig auf die Schaltungsausgänge aus, so daß die Schlupffrequenz hiervon nicht beeinflußt wird.

Vorzugsweise ist jedem Frequenzteiler ein Speicher- und/oder Zählerbaustein zugeordnet, in dem die Vorgabewerte für das Teilerverhältnis binär abspeicherbar sind. Durch Verwendung eines solchen elektronischen Bausteines lassen sich die gewünschten Schlupffrequenzen schrittweise vorgeben, so daß eine zeitaufwendige Schlupfeinstellung und Justierung entfällt.

Die gewünschte Oberwellenarmut der Ausgangssignale läßt sich dann vorteilhaft erreichen, wenn jedem Frequenzteiler ein Bandpaßfilter nachgeordnet ist.

Bei Verwendung eines Quarzoszillators, vorzugsweise mit einer Schwingfrequenz von 1 MHz, arbeitet die Schaltungsanordnung mit einer hochgenauen Zeitbasis, die von jeglichen Schlupfschwankungen des Netzes unabhängig bleibt. Verwendet man einen solchen Quarzoszillator, so ist es weiter von Vorteil, wenn diesem ein weiterer Frequenzteiler nachgeordnet ist, der dann direkt die einzelnen einstellbaren Frequenzteiler ansteuert.

Eine besonders vorteilhafte Ausführung der erfindungsgemäßen Schaltungsanordnung für die Erzeugung von 50 Hz Netzfrequenzwechselspannungssignalen mit zwischen 0 und 1,575 % einstellbarem Schlupf läßt sich dann erreichen, wenn bei Verwendung eines Quarzoszillators mit 1 MHz Schwingfrequenz das Teilerverhältnis des weiteren Frequenzteilers 5 beträgt und die jeweiligen Teilerverhältnisse der einstellbaren Frequenzteiler in ganzzahligen Stufen zwischen 3969 und 4032 vorgebbar sind. Durch die genannten Zahlenwerte ergibt sich eine optimale Einstellung zwischen der Zeitbasis und den an den Schaltungsausgängen gewünschten Schlupfwerten.

Die erfindungsgemäße Schaltungsanordnung findet vorzugsweise Verwendung bei der Überprüfung von Parallelschalteinrichtungen zum frequenz- beziehungsweise phasenrichtigen Anschluß von Wechselstrom- oder Drehstromaggregaten an im Betrieb befindliche Netze. Durch die Vorteile der hochgenauen Schlupffrequenzeinstellung ergibt sich hierbei eine verbesserte Prüfsicherheit bei gleichzeitig verringertem Zeitaufwand für die Kalibrierung der Parallelschalteinrichtung.

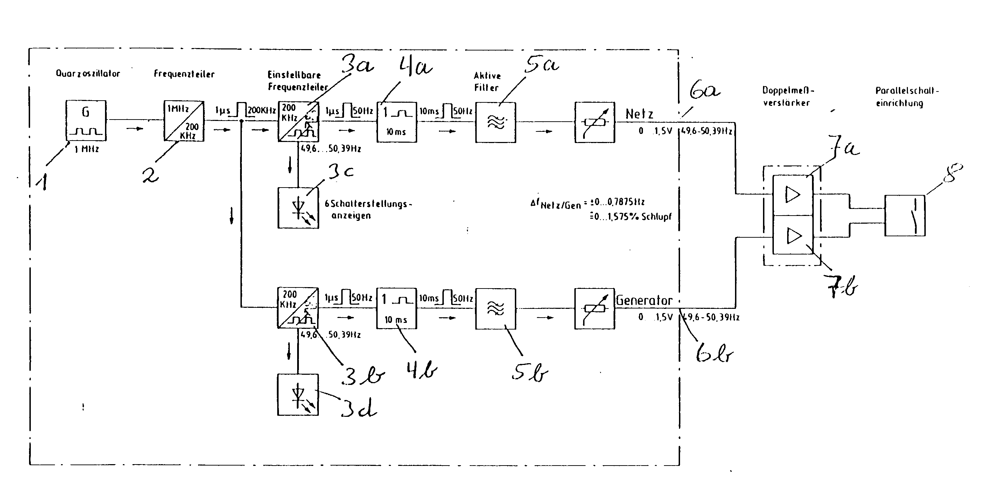

Die Erfindung wird im folgenden anhand eines in der beiliegenden Figur dargestellten Ausführungsbeispiels näher erläutert.

Ein Quarzoszillator 1, der eine Schwingungsfrequenz von 1 MHz erzeugt, ist mit einem weiteren Frequenzteiler 2 verbunden, der ausgangsseitig jeweils mit einem einstellbaren Frequenzteiler 3a,3b gekoppelt ist. Die einstellbaren Frequenzteiler 3a,3b werden jeweils von einem Zählerbaustein angesteuert, in dem feste Zahlenwerte für das jeweilige Teilerverhältnis der einzelnen Frequenzteiler 3a,3b abgespeichert sind. Die jeweilige Einstellung der Teilerverhältnisse wird an den Schalterstellungsanzeigen 3c,3d angezeigt. Den einstellbaren Frequenzteilern 3a,3b nachgeordnet sind Bandpaßfilter, die aus jeweils einem Multivibrator 4a,4b und einem aktiven Filter 5a,5b bestehen. Die Ausgänge 6a,6b der Schaltungsanordnung sind mit einem Doppelmeßverstärker 7a,7b verbunden, der die Amplitude der an den Ausgängen 6a,6b anliegenden Signale auf einen gewünschten Wert verstärkt. Der Doppelmeßverstärker 7a,7b arbeitet auf eine zu prüfende Parallelschalteinrichtung 8.

Die Einstellung des an den Ausgängen 6a,6b der Schaltungsanordnung zur Überprüfung der Grenzschlupfwerte der Parallelschalteinrichtung 8 gewünschten Schlupffrequenz geschieht wie folgt:
Bei einer festen Frequenz von 200 kHz, die an den Eingängen der einstellbaren Frequenzteiler 3a,3b anliegt, ist das Teilerverhältnis der einstellbaren Frequenzteiler 3a,3b auf Werte zwischen 3969 und 4032 am Zählerbaustein einstellbar. Hierdurch ergibt sich die Möglichkeit, an jedem Ausgang eines einstellbaren Frequenzteilers 3a,3b eine Frequenz zwischen 49,6 und 50,39 Hz in dreiundsechzig Stufen einzustellen. Durch die hohe Stabilität der einstellbaren Frequenzteiler 3a,3b sind die abgegebenen Frequenzwerte reproduzierbar. Während bei gleichem eingestellten Teilerverhältnis der beiden Frequenzteiler 3a,3b der am Ausgang 6a beziehungsweise 6b anliegende Schlupf 0 beträgt, läßt sich dieser nach der erfindungsgemäßen Schaltung bis zu einem Wert von 1,575 % entsprechend einem Frequenzunterschied zwischen oberem und unterem Kanal von 0,7875 Hz einstellen, wenn dem Frequenzteiler 3a ein Teilerverhältnis von 3969 und dem Frequenzteiler 3b ein Teilerverhältnis von 4032 eingestellt ist. Auf diese Weise lassen sich die gewünschten für die Einstellung der Parallelschalteinrichtung erforderlichen Schlupfwerte reproduzieren. Beispielsweise dient der obere Pfad mit dem Ausgang 6a zur Simulation der Frequenzverhältnisse des Netzes und der untere Pfad mit dem Ausgang 6 b zur Simulation der Frequenzverhältnisse des an das Netz anzuschließenden Generators.

Die elektronischen Filterstufen 4a,5a beziehungsweise 4b,5b dienen dazu, die von den einstellbaren Frequenzteilern 3a,3b abgegebenen Signale zu klirrfaktorarmen Sinusgrößen aufzuarbeiten, die dann von den beiden Kanälen 7a,7b des Doppelmeßverstärkers, der beispielsweise ein Hi-Fi-Verstärker sein kann, amplitudenmäßig verstärkt werden.

Die erfindungsgemäße Schaltungsanordnung ist universell einsetzbar, da sie einen maximalen Schlupf von 1,575 % ermöglicht, der in dreiundsechzig Schritte von jeweils 0,025 % unterteilbar ist, wobei Störungen durch Schlupfschwankungen des Netzes ausgeschlossen sind.

## Patentansprüche

1. Schaltungsanordnung zur Erzeugung von mindestens zwei Wechselspannungsausgangssignalen (6a,6b) mit veränderbarer Schlupffrequenz,
**dadurch gekennzeichnet,** daß jedem Wechselspannungsausgangssignal (6a,6b) zugeordnete, gemeinsam von einem hochstabilen Oszillator (1) gespeiste Frequenzteiler (3a,3b) vorgesehen sind, deren jeweilige Teilerverhältnisse durch feste Vorgabewerte derart variierbar sind, daß die Schlupffrequenz zwischen den einzelnen Wechselspannungsausgangssignalen (6a,6b) einstellbar ist.

2. Schaltungsanordnung nach Anspruch 1,
**dadurch gekennzeichnet,** daß jedem Frequenzteiler (3a,3b) ein Speicher- und/oder Zählerbaustein zugeordnet ist, in dem die Vorgabewerte als binäre Werte abspeicherbar sind.

3. Schaltungsanordnung nach einem der Ansprüche 1 oder 2,
**dadurch gekennzeichnet,** daß jedem Frequenzteiler (3a,3b) ein Bandpaßfilter (4a,4b,5a,5b) zugeordnet ist.

4. Schaltungsansordnung nach einem der Ansprüche 1 bis 3,
**dadurch gekennzeichnet,** daß der Oszillator ein Quarzoszillator (1), vorzugsweise mit einer Schwingfrequenz von 1 MHz, ist.

5. Schaltungsanordnung nach Anspruch 4,
**dadurch gekennzeichnet,** daß zwischen Quarzoszillator (1) und den Frequenzteilern (3a,3b) ein weiterer Frequenzteiler (2) mit festem Teilerverhältnis angeordnet ist.

6. Schaltungsanordnung nach einem der Ansprüche 1 bis 5, für die Erzeugung von Wechselspannungsausgangssignalen im Netzfrequenzbereich, deren Schlupffrequenz zwischen 0 und 1,56 % einstellbar ist,
**dadurch gekennzeichnet,** daß bei einer Schwingfrequenz des Quarzoszillators (1) von insbesondere 1 MHz das Teilerverhältnis des weiteren Frequenzteilers (2) fünffach ist und daß die Teilerverhältnisse eines jeden Frequenzteilers (3a,3b) in ganzzahligen Stufen, insbesondere zwischen 3969 und 4032 vorgebbar sind.

7. Verwendung einer Schaltungsanordnung nach einem der Ansprüche 1 bis 6,
zur Überprüfung von Parallelschalteinrichtungen zum frequenz- und phasenrichtigen Anschluß von Wechselstrom- oder Drehstromaggregaten an im Betrieb befindliche Stromnetze.

## Claims

1. A circuit arrangement for the generation of at least two alternating voltage output signals (6a, 6b) with variable differential frequency, characterized in that frequency dividers (3a, 3b) are provided which are associated with each alternating voltage output signal (6a, 6b) and are jointly supplied from a high stability oscillator (1) and whose particular divider ratios can be so varied by fixed given values that the differential frequency can be adjusted between the individual alternating voltage output signals (6a, 6b).

2. A circuit arrangement according to claim 1, characterized in that associated with each frequency divider (3a, 3b) is a store and/or counter unit in which the given values can be stored as binary values.

3. A circuit arrangement according to one of claims 1 or 2, characterized in that a band pass filter (4a, 4b, 5a, 5b) is associated with each frequency divider (3a, 3b).

4. A circuit arrangement according to one of claims 1 to 3, characterized in that the oscillator is a quartz oscillator (1), preferably having an oscillation frequency of 1 MHz.

5. A circuit arrangement according to claim 4, characterized in that a further frequency divider (2) with a fixed divider ratio is disposed between the quartz oscillator (1) and the frequency dividers (3a, 3b).

6. A circuit arrangement according to one of claims 1 to 5, for the generation of alternating voltage output signals in the mains frequency range, whose differential frequency can be adjusted between 0 and 1.56%, characterized in that with an oscillation frequency of the quartz oscillator (1) of more particularly 1 MHz, the divider ratio of the further frequency divider (2) is five-fold, and the divider ratios of each frequency divider (3a, 3b) can be given in integral stages, more particularly between 3969 and 4032.

7. Use of a circuit arrangement according to one of claims 1 to 6, for checking parallel switching devices for the connection in correct frequency and phase of alternating current or three-phase current units to mains supplies in operation.

## Revendications

1. Ensemble de montage pour engendrer au moins deux signaux de sortie (6a, 6b) en tension alternative à fréquence de glissement modifiable,
caractérisé en ce qu'on prévoit des démultiplicateurs de fréquence (3a, 3b) adjoints à chaque signal de sortie (6a, 6b) en tension alternative, alimentés en commun par un oscillateur (1) à stabilité élevée, dont les rapports de démultiplication respectifs peuvent être modifiés par des valeurs de référence de telle manière que la fréquence de glissement peut être réglée entre les signaux de sortie (6a, 6b) en tension alternative individuels.

2. Ensemble de montage selon la revendication 1,
caractérisé en ce qu'un élément de mémoire et/ou de compteur est adjoint à chaque démultiplicateur de fréquence (3a, 3b), dans lequel la valeur prédéfinie pour le rapport de démultiplication peut être mémorisée sous forme de valeur binaire.

3. Ensemble de montage selon l'une des revendications 1 ou 2,
caractérisé en ce qu'un filtre passe-bande (4a, 4b, 5a, 5b) est intercalé après chaque démultiplicateur de fréquence (3a, 3b).

4. Ensemble de montage selon l'une des revendications 1 à 3,
caractérisé en ce que l'oscillateur est un oscillateur à quartz (1), de préférence à une fréquence d'oscillations de 1 MHz.

5. Ensemble de montage selon la revendication 4,
caractérisé en ce qu'un autre démultiplicateur de fréquence (2) à rapport de démultiplication fixe est disposé entre l'oscillateur à quartz (1) et les démultiplicateurs de fréquence (3a, 3b).

6. Ensemble de montage selon l'une des revendications 1 à 5,
pour engendrer des signaux de sortie en tension alternative dans la région de fréquence du réseau, dont la fréquence de glissement est réglable entre 0 et 1,56 %,
caractérisé en ce que, avec une fréquence d'oscillations de l'oscillateur à quartz (1) d'en particulier 1 MHz, le rapport de démultiplication de l'autre démultiplicateur de fréquence (2) est égal à cinq et que les rapports de démultiplication de chacun des démultiplicateurs de fréquence réglables (3a, 3b) sont prédéfinissables en gradins en nombres entiers en particulier entre 3969 et 4032.

7. Utilisation d'un ensemble de montage selon l'une des revendications 1 à 6,
pour l'inspection de dispositifs de montage en parallèle pour le raccordement en concordance de 'fréquence et de phase, d'éléments à courant alternatif ou à courant triphasé à des réseaux se trouvant en fonctionnement.
